# FASCICULE DE BREVET EUROPEEN

(11) **EP 2 986 534 B1**
(45) Date de publication et mention de la délivrance du brevet: **15.03.2017**
(21) Numéro de dépôt: 13882528.6
(22) Date de dépôt: 15.04.2013
(51) Int. Cl.: B65D 81/20, C12H 1/14

(54) **METHODE D'AERATION D'UN VIN PREALABLEMENT A SA DEGUSTATION ET DISPOSITIF ASSOCIE**
VERFAHREN ZUM BELÜFTEN VON WEIN VOR DER VERKOSTUNG UND ZUGEHÖRIGE VORRICHTUNG
METHOD FOR AERATING A WINE PRIOR TO TASTING SAME, AND ASSOCIATED DEVICE

(43) Date de publication de la demande: 24.02.2016
(73) Titulaire: Paetzold, Michael, 33650 La Brede (FR)
(72) Inventeur: Paetzold, Michael, 33650 La Brede (FR)
(74) Mandataire: Fantin, Laurent
(86) Numéro de dépôt international: PCT/FR2013/050819
(87) Numéro de publication internationale: WO 2014/170558

(56) Documents cités:
- WO-A1-2011/141773
- DE-U1- 9 317 842
- GB-A- 2 477 308
- US-A- 2 203 229
- US-A- 3 942 423
- US-A1- 2008 219 092
- US-A1- 2012 031 915
- US-A1- 2012 201 942

## Description

La présente invention se rapporte au domaine de la dégustation des vins et plus particulièrement à une méthode pour aérer un vin préalablement à sa dégustation. Elle se rapporte également à un dispositif permettant de mettre en oeuvre cette méthode.

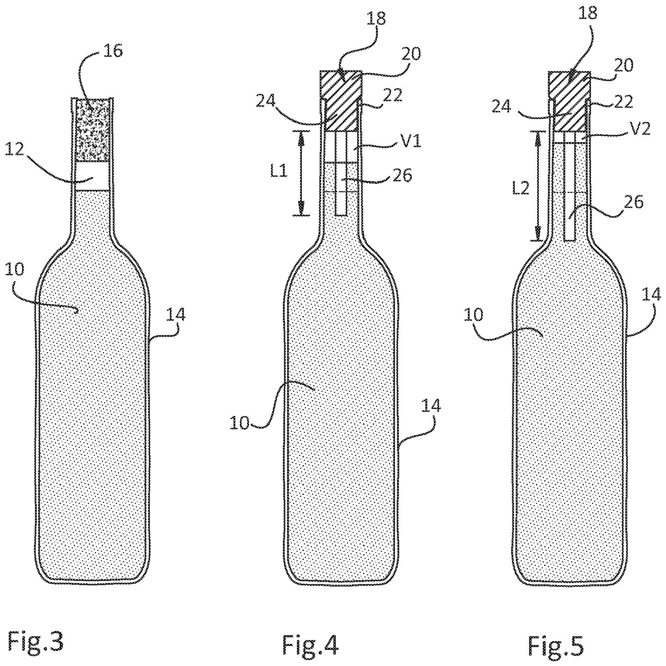

Après la phase de vinification, le vin est généralement stocké dans une bouteille fermée par un bouchon. Ainsi, comme illustré sur la figure 3, un certain volume de vin 10 et un faible volume d'air 12 sont enfermés dans la bouteille 14.

Après la mise en bouteille, le vin évolue très lentement en étant en contact avec une très très faible quantité d'oxygène, celui contenu dans le volume d'air 12, puis celui apporté grâce aux échanges gazeux autorisés par la faible porosité du bouchon 16.

Après son ouverture, le vin est en contact avec l'air ambiant et subit un apport brutal et important d'oxygène.

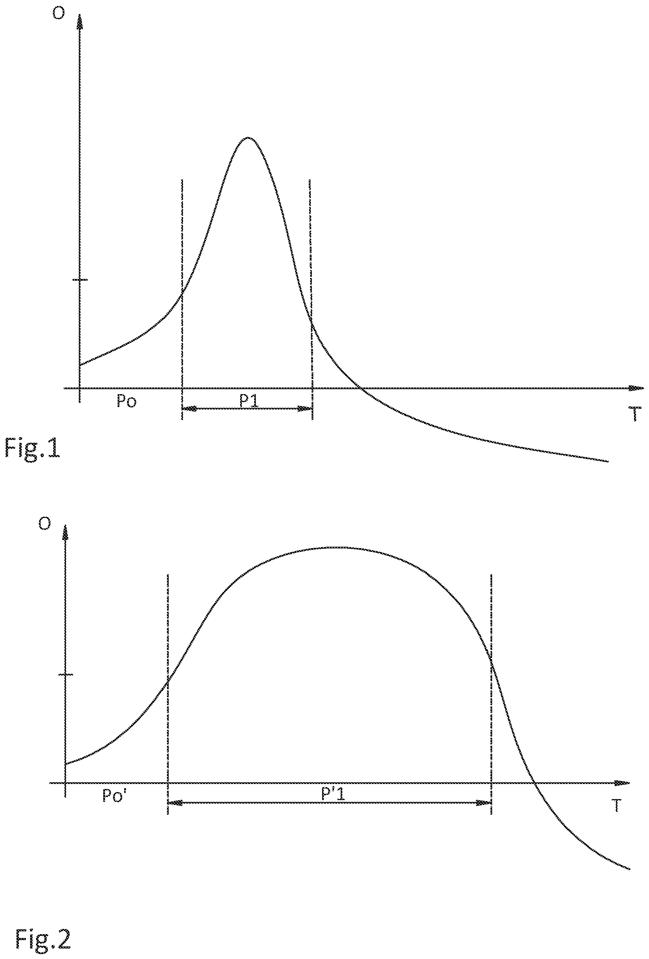

Généralement, l'évolution du vin suit une courbe comme illustré sur la figure 1 qui illustre l'oxydation du vin en fonction du temps après son ouverture.

Pendant une première phase, cet apport est bénéfique et améliore les qualités organoleptiques du vin jusqu'à atteindre un maximum. Par la suite, les qualités organoleptiques du vin se dégradent progressivement.

Ainsi, pendant une phase P0, on dit que le vin s'ouvre. Cette phase est suivie par la phase propice à la dégustation P1. Passé cette phase P1 appelée également fenêtre de dégustation, le vin n'est pas dans un état optimal pour la dégustation et perd progressivement ses caractéristiques gustatives et aromatiques.

En fonction de l'âge, de la nature (rouge/blanc), de la fragilité et d'autres caractéristiques du vin, les phases P0 et P1 sont plus ou moins longues. Ainsi, la phase P0 peut varier de l'ordre de 5 min à de l'ordre de 1 à 2 heures. La fenêtre de dégustation P1 a généralement une durée courte de l'ordre de 1 min à 2h. Compte tenu de la valeur de certains vins, il est important de maitriser cette phase d'ouverture qui consiste à aérer le vin pour optimiser ses qualités organoleptiques et pouvoir correctement l'apprécier.

Pour aérer un vin, une solution peut consister à le passer en carafe. Ainsi, le vin est transvasé dans une carafe ayant un volume donné supérieur au contenu de la bouteille. Ainsi, dans la carafe, le vin est mis en contact avec un volume d'air donné en fonction du volume de la carafe.

Selon un premier inconvénient, une carafe ne permet pas un apport ménagé. Dans la majorité des cas, le vin va être mis en contact dans la carafe avec une quantité d'oxygène trop importante qui va certes lui permettre d'atteindre très rapidement la phase P1 mais également de déclencher très rapidement une phase P2 lors de laquelle les qualités organoleptiques du vin vont se dégrader progressivement. Ainsi, en utilisant une carafe pour oxygéner le vin, la phase P1 va être considérablement raccourcie ce qui va accroitre la difficulté pour le consommateur de la saisir.

Selon un autre inconvénient, la carafe ne permet pas de déterminer la durée de la phase P0 nécessaire pour que le vin s'ouvre, ni la fenêtre de dégustation P1. Par expérience, un connaisseur peut déterminer la durée de la phase P0 nécessaire pour que le vin s'ouvre et la fenêtre de dégustation optimale. Toutefois, cette expérience est longue à acquérir, si bien qu'il existe un besoin pour les personnes moins expérimentées pour évaluer la période propice à la dégustation.

Une alternative à cette expérience consiste à déguster le vin à intervalles réguliers pour vérifier son évolution. Toutefois, cette solution n'est pas optimale puisqu'il peut être nécessaire de gouter un grand nombre de fois le vin avant d'atteindre la phase de dégustation.

Selon un autre inconvénient, le volume d'air en contact avec le vin dans la carafe peut être trop important et conduire à détériorer les qualités organoleptiques du vin.

US 2008/219092 A1, US 2203229 A, GB 2477308 A et DE 9317842 U1 décrivent des dispositifs comprenant un corps, une tête et un barreau qui sont aptes à fermer une bouteille de vin.

Aussi, la présente invention vise à pallier aux inconvénients de l'art antérieur en proposant une méthode pour aérer un vin susceptible d'être mise en oeuvre par une personne même non expérimentée afin d'optimiser sa dégustation.

A cet effet, l'invention a pour objet une méthode d'aération d'un vin préalablement à sa dégustation, ledit vin étant contenu dans une bouteille comportant un goulot obturé par un bouchon, ladite méthode consistant après le retrait du bouchon, à mettre le vin en contact avec un volume d'air pendant une durée avant de le déguster, caractérisée en ce qu'elle consiste à déterminer un volume d'air nécessaire au vin pour s'ouvrir en fonction de ses propriétés, à refermer la bouteille de manière à isoler le vin et le volume d'air déterminé de l'extérieur, à homogénéiser le contenu de la bouteille et à attendre une durée P0' déterminée préalablement à sa dégustation.

L'invention propose également un dispositif pour la mise en oeuvre du procédé qui se caractérise en ce qu'il comprend au moins une pige avec d'une part une première partie appelée tête susceptible de coopérer avec un goulot d'une bouteille limitant les transferts de gaz entre l'extérieur et l'intérieur de la bouteille, et d'autre part, une seconde partie appelée corps dont les dimensions sont inférieures à la section du goulot de manière à permettre audit corps d'être introduit à l'intérieur de la bouteille au niveau du goulot sous la tête, ledit corps ayant un volume adapté en fonction d'un volume d'air nécessaire au vin pour s'ouvrir en fonction de ses propriétés.

Enfin, l'invention propose également un kit comportant plusieurs piges, chacune comportant un prolongement au niveau du corps dont la longueur varie d'une pige à l'autre.

D'autres caractéristiques et avantages ressortiront de la description qui va suivre de l'invention, description donnée à titre d'exemple uniquement, en regard des dessins annexés sur lesquels :
- la figure 1 est une courbe illustrant l'oxydation du vin en fonction du temps après son ouverture en utilisant une méthode d'aération de l'art antérieur,
- la figure 2 est une courbe illustrant l'oxydation du vin en fonction du temps après son ouverture en utilisant une méthode d'aération selon l'invention,
- la figure 3 est une coupe illustrant une bouteille de vin bouchée,
- la figure 4 est une coupe d'une bouteille de vin équipée d'une première pige selon l'invention après le débouchage,
- la figure 5 est une coupe d'une bouteille de vin équipée d'une autre pige selon l'invention après le débouchage,
- la figure 6 est une représentation d'un kit de piges selon l'invention,
- la figure 7 est un tableau de détermination de la pige adaptée au vin débouché,
- la figure 8 est une vue en élévation d'une pige selon un mode de réalisation,
- la figure 9A est une coupe transversale d'une pige selon une première variante,
- la figure 9B est une coupe transversale d'une pige selon une autre variante, et
- la figure 10 est une vue en perspective de la pige illustrées sur la figure 8.

Sur la figure 3, on a représenté une bouteille 14 contenant un certain volume de vin 10 et un faible volume d'air 12, bouchée par un bouchon 16.

Après l'ouverture de la bouteille, le vin doit être aéré afin de s'ouvrir.

Contrairement à l'art antérieur qui propose de mettre tous les types de vin en contact avec le même volume d'air et d'attendre une durée P0 pour déguster le vin qui peut varier en fonction des propriétés du vin, la méthode d'aération consiste à déterminer un volume d'air nécessaire au vin en fonction de ses propriétés et d'attendre une durée P0' déterminée, à refermer la bouteille de manière à isoler le vin et le volume d'air déterminé de l'extérieur et à retourner la bouteille, de préférence plusieurs fois de manière à homogénéiser le contenu de la bouteille.

Selon un autre aspect, l'invention consiste à mettre en contact du vin un volume d'air faible de l'ordre de quelques millilitres, inférieur à 5 ml. Ce point permet d'obtenir un aération plus progressive et d'augmenter ainsi la durée de la fenêtre de dégustation P1'. De plus, il limite les risques d'altération du vin.

L'invention propose un tableau permettant en fonction des propriétés du vin de déterminer le volume d'air à mettre en contact avec le vin.

Selon un mode simplifié, utilisable par tous, ce tableau comprend deux entrées, une première entrée relative au type de vin blanc ou rouge et une seconde entrée en fonction de la fragilité du vin qui comprend au moins deux variables à savoir fragile et moins fragile, ou plusieurs variables qui sont très fragile F++, fragile F+, moyennement fragile F, peu fragile F- et très peu fragile F--.

Par fragile, on entend un vin qui comprend peu de matière à ouvrir par oxydation. D'autres propriétés du vin pourraient être utilisées pour déterminer le volume d'air à mettre en contact avec le vin, comme par exemple l'âge, la couleur, le cépage, la provenance, la quantité en tanin, le prix,....

Selon l'invention, plus le vin est fragile et plus il conviendra de réduire le volume d'air en contact avec le vin. Ainsi, pour un vin rouge très fragile, le volume d'air en contact avec le vin est de l'ordre de quelques millilitres, de préférence de l'ordre de 0,5 ml. De plus, à fragilités égales, le volume d'air en contact avec un vin rouge sera plus important que le volume d'air en contact avec un vin blanc. Pour mettre en oeuvre la méthode d'aération du vin, l'invention propose également au moins un dispositif appelé pige 18 permettant d'isoler un certain volume d'air en contact avec le vin.

Ainsi, sitôt l'ouverture de la bouteille, on place une pige 18 au niveau du goulot de la bouteille de manière à isoler un certain volume d'air en contact avec le vin, comme illustré sur les figures 3 et 4, puis on retourne la bouteille afin de disposer le goulot vers le bas de manière à améliorer l'oxygénation et atteindre la fenêtre de dégustation P1'.

Le volume d'oxygène mis en contact peut être ajusté afin de tenir compte du volume de vin utilisé pour la dégustation lors de l'ouverture de la bouteille.

Selon l'invention, une pige 18 comprend d'une part une première partie 20 appelée tête susceptible de coopérer avec un goulot 22 d'une bouteille limitant les transferts de gaz entre l'extérieur et l'intérieur de la bouteille, et d'autre part, une seconde partie 24 appelée corps dont les dimensions sont inférieures à la section du goulot de manière à permettre audit corps d'être introduit à l'intérieur de la bouteille au niveau du goulot sous la barrière formée par la tête 20.

D'une pige à l'autre, le corps 24 a un volume différent si bien qu'il est possible de moduler le volume d'air emprisonné par la pige en contact avec le vin en choisissant la pige adéquate 18.

Le corps 24 peut comprendre un prolongement sous forme d'un barreau 26 apte à plonger dans le vin de manière à réduire la quantité d'air en contact avec le vin.

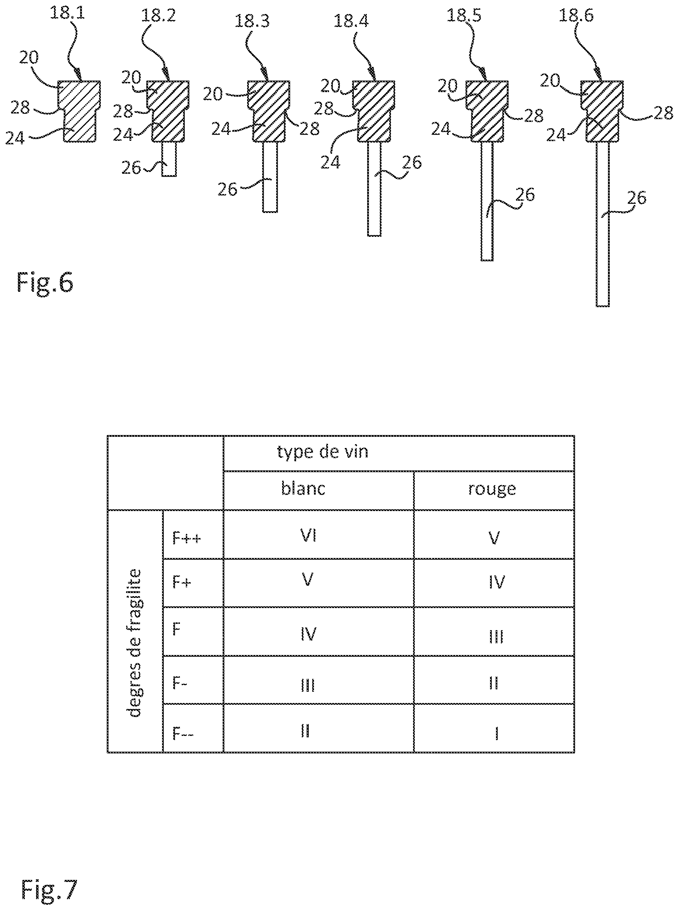

Ainsi, lorsqu'on dispose une pige 18.1 au niveau du goulot d'une bouteille avec un barreau 26 d'une certaine longueur L1, on emprisonne un volume V1 d'air en contact avec le vin, comme illustré sur la figure 4. Lorsqu'on dispose une pige 18.2 au niveau du goulot avec un barreau d'une longueur L2 supérieure à L1, on emprisonne un volume V2 d'air inférieur au volume V1, comme illustré sur la figure 5, le niveau du vin étant plus haut sur la figure 5 que sur la figure 4. Selon un mode de réalisation, le barreau 26 est solidaire du corps et inamovible. Dans ce cas, le kit comprend plusieurs piges 18.1 à 18.6 comme illustré sur la figure 6, chacune ayant un barreau 26 plus ou moins long, éventuellement la première pige 18.1 ne comprenant pas de barreau.

Selon un autre mode de réalisation, le barreau 26 peut être lié de manière amovible au corps 24. Dans ce cas, le kit peut comprend une seule pige et plusieurs barreaux de longueurs différentes qui peuvent se fixer au corps 24 de la pige.

Selon un autre mode de réalisation, la liaison entre le corps 24 et le barreau 26 autorise un mouvement relatif entre le barreau et le corps de manière à pouvoir ajuster la longueur du barreau en saillie par rapport au corps. A cet effet, le barreau peut coulisser ou se visser dans le corps pour ajuster sa longueur et le volume d'air isolé en contact avec le vin.

Différents matériaux peuvent être envisagés pour réaliser la pige. Bien entendu, les parties de la pige en contact avec le vin doivent être en matériau dit « alimentaire ».

Selon un mode de réalisation préféré, la tête et le corps sont réalisés d'un seul tenant et se présentent sous la forme d'un cylindre avec une première partie formant la tête 20 avec un premier diamètre supérieur à celui du goulot et une seconde partie formant le corps 24 avec un diamètre inférieur à celui de la première partie, ajusté ou légèrement inférieur à celui du goulot de la bouteille. Ainsi, la tête 20 et le corps 24 sont délimités par un épaulement 28 qui prend appui contre l'extrémité du goulot 22, ce qui permet d'obtenir un positionnement précis de la pige par rapport au goulot et une parfaite maitrise du volume d'air en contact avec le vin.

Toutefois, l'invention n'est pas limitée à cette forme de pige mais en couvre toutes les variantes. A titre d'exemple, la tête et le corps peuvent être tronconique.

Selon un mode de réalisation, la partie de la pige en contact avec le goulot est en un matériau déformable de manière à assurer une étanchéité satisfaisante entre la pige et le goulot. Selon un mode de réalisation, la pige peut comprendre un revêtement déformable au moins au niveau de sa surface en contact avec le goulot ou être en un matériau déformable dans la masse.

Selon un mode de réalisation, la partie de la pige en contact avec le goulot est en élastomère.

Sur le plan esthétique, la tête 20 peut être surmontée d'une coiffe (non représentée).

Avantageusement, un dispositif d'aération d'un vin comprend un kit de piges 18.1 à 18.6 ou de barreaux permettant d'isoler un certain volume d'air en contact avec le vin.

De préférence, pour simplifier la mise en oeuvre de la méthode d'aération, le kit comprend également un tableau illustré sur la figure 7 répertoriant la pige à utiliser en fonction des propriétés du vin à déguster et la durée de la période P0' à attendre avant la dégustation à compter du moment où la bouteille est débouchée et que la pige est mise en place au niveau du goulot.

Ainsi, les références I à VI correspondent à six piges différentes 18.1 à 18.6 qui permettent d'isoler un volume d'air de plus en plus réduit.

Avantageusement, la partie de la pige insérée dans le goulot et de préférence celle susceptible d'être immergée dans le vin peut comprendre des éléments actifs à savoir par exemple des éléments permettant d'absorber certaines odeurs.

Pour améliorer l'aération, une fois la pige mise en place, la bouteille peut être renversée de manière à orienter son goulot vers le bas, puis redressée. Durant cette opération, l'utilisateur maintient la pige en position contre le goulot en plaquant sa main contre la pige. Cette opération peut être renouvelée plusieurs fois.

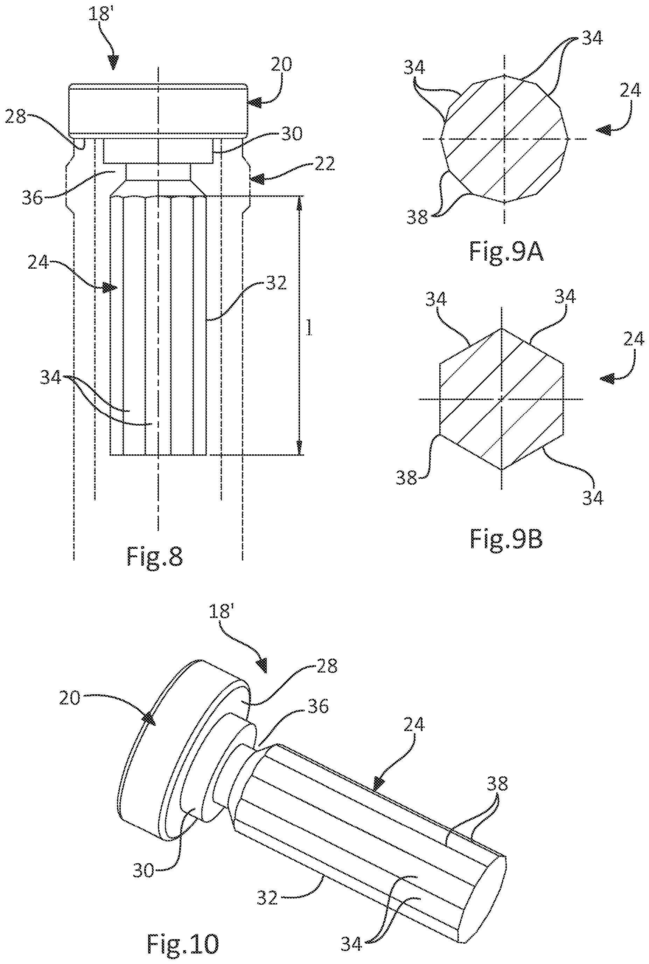

Sur les figures 8, 9A, 9B et 10, on a représenté un mode de réalisation d'une pige 18' selon l'invention mise en place au niveau d'un goulot 22 d'une bouteille représenté en trait mixte.

Comme précédemment, cette pige 18' comprend une tête 20 et un corps 24.

La tête 20 se présente sous la forme d'un cylindre avec un diamètre supérieur au diamètre intérieur du goulot.

Le corps 24 se présente sous la forme d'un élément longiligne plus ou moins long sensiblement coaxial à la tête 20, avec une section inférieure à la section de la tête 20, adaptée pour pouvoir pénétrer dans le goulot 22.

Cette tête 20 comprend une surface inférieure à partir de laquelle s'étend le corps 24. La différence de section entre la tête 20 et le corps 24 permet de définir une surface périphérique qui forme un épaulement 28 apte à prendre appui contre l'extrémité du goulot 22. Cet épaulement 28 peut être revêtu d'un matériau souple pour assurer une meilleure étanchéité entre la pige 18' et le goulot 22.

Selon ce mode de réalisation, le corps 24 comprend une partie supérieure 30 reliée à la tête 20 et une partie inférieure 32 appelée par la suite barreau.

La partie supérieure 30 a une forme cylindrique coaxiale à la tête 20 avec un diamètre inférieur au diamètre intérieur du goulot 22.

Le barreau 32 a une longueur l qui est plus ou moins longue en fonction des piges. Selon une variante non représentée, le barreau 32 a une section circulaire.

En variante, le barreau 32 a des sections polygonales dans des plans transversaux (perpendiculaires à l'axe du corps 24). Ainsi, le barreau 32 présente en périphérie une succession de méplats ou facettes 34. Ces facettes 34 permettent de définir des arêtes 38 parallèles à l'axe du corps 24. Plus généralement, le corps 24 comprend au moins une facette 34 permettant de délimiter des arêtes 38 parallèles à l'axe du corps 24. Cette configuration permet d'optimiser l'homogénéisation du vin.

Le nombre de facettes 34 peut varier d'une variante à l'autre. Ainsi, selon un mode de réalisation illustré sur la figure 9A, le barreau 32 a douze côtés ce qui permet d'obtenir douze facettes 34.

Selon un autre mode de réalisation illustré sur la figure 9B, le barreau 32 a une section hexagonale ce qui permet d'obtenir six facettes 34.

Avantageusement, le corps 24 comprend une gorge périphérique 36 à proximité de la tête 20. De préférence, la gorge périphérique 36 est intercalée entre la partie supérieure 30 et le barreau 32. Le fond de la gorge périphérique 36 forme une restriction du corps 24 et a une section inférieure aux parties 30 et 32. Ainsi, la gorge périphérique 36 forme une réserve qui permet de ralentir la vitesse de montée du niveau supérieur du vin lorsque la pige 18' est introduite dans le goulot 22 et que le corps 24 plonge dans le vin.

Cet configuration permet de limiter les risques de débordement.

## Revendications

1. Méthode d'aération d'un vin préalablement à sa dégustation, ledit vin étant contenu dans une bouteille comportant un goulot obturé par un bouchon, ladite méthode consistant après le retrait du bouchon, à mettre le vin en contact avec un volume d'air pendant une durée avant de le déguster, **caractérisée en ce qu'**elle consiste :
- à déterminer un volume d'air nécessaire au vin pour s'ouvrir en fonction de ses propriétés,
- à refermer la bouteille en plaçant au niveau du goulot une pige (18) comportant d'une part une première partie (20) appelée tête configurée pour coopérer avec ledit goulot (22) de manière à limiter les transferts de gaz entre l'extérieur et l'intérieur de la bouteille, et d'autre part, une seconde partie (24) appelée corps dont les dimensions sont inférieures à la section du goulot de manière à permettre audit corps d'être introduit à l'intérieur de la bouteille au niveau du goulot sous la tête (20), ledit corps (24) ayant un volume adapté en fonction du volume d'air déterminé à mettre en contact avec le vin,
- à homogénéiser le contenu de la bouteille, et
- à attendre une durée P0' déterminée préalablement à sa dégustation.

2. Méthode d'aération d'un vin selon la revendication 1, **caractérisée en ce qu'**il consiste à mettre en contact avec le vin un volume d'air inférieur à 5 ml.

3. Méthode d'aération d'un vin selon la revendication 1 ou 2, **caractérisé en ce qu'**il consiste à renverser la bouteille en maintenant la pige en contact avec le goulot de manière à orienter son goulot vers le bas, puis à la redresser afin d'homogénéiser le vin.

4. Dispositif d'aération d'un vin pour la mise en oeuvre du procédé d'aération d'un vin préalablement à sa dégustation selon l'une des revendications précédentes, **caractérisé en ce qu'**il comprend au moins une pige (18) avec d'une part une première partie (20) appelée tête susceptible de coopérer avec un goulot (22) d'une bouteille limitant les transferts de gaz entre l'extérieur et l'intérieur de la bouteille, et d'autre part, une seconde partie (24) appelée corps dont les dimensions sont inférieures à la section du goulot de manière à permettre audit corps d'être introduit à l'intérieur de la bouteille au niveau du goulot sous la tête (20), ledit corps (24) ayant un volume adapté en fonction d'un volume d'air à isoler en contact avec le vin, ledit volume d'air étant déterminé pour permettre au vin de s'ouvrir en fonction de ses propriétés.

5. Dispositif d'aération d'un vin selon la revendication 4 **caractérisé en ce que** le corps (24) comprend un prolongement sous forme d'un barreau (26, 32) apte à plonger dans le vin de manière à réduire la quantité d'air en contact avec le vin.

6. Dispositif d'aération d'un vin selon la revendication 5, **caractérisé en ce que** le barreau (26, 32) est inamovible.

7. Dispositif d'aération d'un vin selon la revendication 5, **caractérisé en ce que** le barreau (26) est amovible.

8. Dispositif d'aération d'un vin selon la revendication 5, **caractérisé en ce que** le barreau (26) est relié au corps (24) grâce à une liaison qui autorise un mouvement relatif entre le barreau et le corps de manière à pouvoir ajuster la longueur du barreau en saillie par rapport au corps.

9. Dispositif d'aération d'un vin selon l'une des revendications 5 à 8, **caractérisé en ce que** le barreau (32) comprend au moins une facette (34) permettant de définir des arêtes (38) parallèles à l'axe du corps (24).

10. Dispositif d'aération d'un vin selon la revendication 9, **caractérisé en ce que** le barreau (32) a une section hexagonale.

11. Dispositif d'aération d'un vin selon l'une des revendications 4 à 10, **caractérisé en ce que** le corps (24) comprend une gorge périphérique (36) à proximité de la tête (20).

12. Kit pour la mise en oeuvre du procédé d'aération d'un vin préalablement à sa dégustation selon l'une des revendications 1 à 3, **caractérisé en ce qu'**il comprend plusieurs piges (18), chacune avec d'une part une première partie (20) appelée tête susceptible de coopérer avec un goulot (22) d'une bouteille limitant les transferts de gaz entre l'extérieur et l'intérieur de la bouteille, et d'autre part, une seconde partie (24) appelée corps dont les dimensions sont inférieures à la section du goulot de manière à permettre audit corps d'être introduit à l'intérieur de la bouteille au niveau du goulot sous la barrière formée par la tête (20), le corps (24) comportant un prolongement sous forme d'un barreau dont la longueur varie d'une pige à l'autre.

13. Kit pour la mise en oeuvre du procédé d'aération d'un vin préalablement à sa dégustation selon la revendication 12, **caractérisé en ce qu'**il comprend un tableau répertoriant la pige à utiliser en fonction des propriétés du vin à déguster et la durée de la période P0' à attendre avant la dégustation à compter du moment où la bouteille est débouchée et que la pige est mise en place au niveau du goulot.

14. Kit pour la mise en oeuvre du procédé d'aération d'un vin préalablement à sa dégustation selon la revendication 13, **caractérisé en ce que** le tableau comprend deux entrées, une première entrée relative au type de vin blanc ou rouge et une seconde entrée en fonction de la fragilité du vin qui comprend au moins deux variables.

## Patentansprüche

1. Verfahren zur Belüftung eines Weins vor dessen Verkostung, wobei der Wein in einer Flasche enthalten ist, die einen von einem Korken verschlossenen Flaschenhals aufweist und wobei das Verfahren nach dem Abziehen des Korkens darin besteht, Wein vor der Verkostung während einer Zeitdauer in Kontakt mit einem Luftvolumen zu bringen, **dadurch gekennzeichnet, dass** dieses darin besteht:
- ein Luftvolumen zu bestimmen, das der Wein in Abhängigkeit von seinen Eigenschaften benötigt, um sich zu öffnen,
- die Flasche wieder zu verschließen, indem im Bereich des Flaschenhalses eine Lehre (18) angeordnet wird, die einerseits einen ersten Teil (20) aufweist, der als Kopf bezeichnet wird und dazu eingerichtet ist, mit dem Flaschenhals (22) zusammenzuwirken, um auf diese Weise den Gasaustausch zwischen dem Äußeren und dem Inneren der Flasche zu begrenzen, und die andererseits einen zweiten Teil (24) aufweist, der als Körper bezeichnet wird, dessen Abmessungen kleiner als der Querschnitt des Flaschenhalses sind, um auf diese Weise dem Körper zu gestatten, im Bereich des Flaschenhalses unter dem Kopf (20) in das Innere der Flasche eingeführt zu werden, wobei der Körper (24) über ein Volumen verfügt, das in Abhängigkeit vom Luftvolumen eingestellt ist, das dazu bestimmt ist, mit dem Wein in Kontakt gebracht zu werden,
- den Inhalt der Flasche zu homogenisieren, und
- eine bestimmte Zeitdauer P0' vor dessen Verkostung zu warten.

2. Verfahren zur Belüftung eines Weins nach Anspruch 1, **dadurch gekennzeichnet, dass** dieses darin besteht ein Luftvolumen kleiner 5 ml mit dem Wein in Kontakt zu bringen.

3. Verfahren zur Belüftung eines Weins nach Anspruch 1 oder 2, **dadurch gekennzeichnet, dass** dieses darin besteht, die Flasche umzudrehen, während die Lehre in Kontakt mit dem Flaschenhals gehalten wird, um auf diese Weise deren Flaschenhals nach unten auszurichten und diese wieder aufzurichten, um den Wein zu homogenisieren.

4. Vorrichtung zur Belüftung eines Weins für die Ausführung eines Verfahrens zur Belüftung eines Weins vor dessen Verkostung nach einem der vorhergehenden Ansprüche, **dadurch gekennzeichnet, dass** diese wenigstens eine Lehre (18) aufweist, mit einerseits einem ersten Teil (20), der als Kopf bezeichnet wird und dazu eingerichtet ist, mit dem Flaschenhals (22) einer Flasche zusammenzuwirken, und dabei den Gasaustausch zwischen dem Äußeren und dem Inneren der Flasche begrenzt, und andererseits mit einem zweiten Teil (24), der als Körper bezeichnet wird, dessen Abmessungen kleiner als der Querschnitt des Flaschenhalses sind, um auf diese Weise zu gestatten, dass der Körper im Bereich des Flaschenhalses unterhalb des Kopfes (20) in das Innere der Flasche eingeführt wird, wobei der Körper (24) über ein Volumen verfügt, das in Abhängigkeit von dem in Kontakt mit dem Wein stehenden, zu isolierenden Luftvolumen bemessen ist, wobei das Luftvolumen so eingestellt ist, dass dem Wein gestattet ist, sich in Abhängigkeit von seinen Eigenschaften zu öffnen.

5. Vorrichtung zur Belüftung eines Weins nach Anspruch 4, **dadurch gekennzeichnet, dass** der Körper (24) eine Verlängerung in der Gestalt eines Stabes (26, 32) aufweist, der sich dazu eignet, in den Wein einzutauchen, um auf diese Weise die Luftmenge in Kontakt mit dem Wein zu reduzieren.

6. Vorrichtung zur Belüftung eines Weins nach Anspruch 5, **dadurch gekennzeichnet, dass** der Stab (26, 32) nicht beweglich ist.

7. Vorrichtung zur Belüftung eines Weins nach Anspruch 5, **dadurch gekennzeichnet, dass** der Stab (26) beweglich ist.

8. Vorrichtung zur Belüftung eines Weins nach Anspruch 5, **dadurch gekennzeichnet, dass** der Stab (26) mit dem Körper (24) mit Hilfe einer Verbindung verbunden ist, die es gestattet, eine Relativbewegung zwischen dem Stab und dem Körper auszuführen, um auf diese Weise die vorstehende Länge des Stabes bezügliche des Körpers einzustellen.

9. Vorrichtung zur Belüftung eines Weins nach einem der Ansprüche 5 bis 8, **dadurch gekennzeichnet, dass** der Stab (32) wenigstens eine Facette (34) aufweist, die es gestattet parallel zur Achse des Körpers (24) ausgerichtete Kanten (38) zu bestimmen.

10. Vorrichtung zur Belüftung eines Weins nach Anspruch 9, **dadurch gekennzeichnet, dass** der Stab (32) einen sechseckigen Querschnitt hat.

11. Vorrichtung zur Belüftung eines Weins nach einem der Ansprüche 4 bis 10, **dadurch gekennzeichnet, dass** der Körper (24) eine umlaufende Einschnürung (36) in der Nähe des Kopfes (20) aufweist.

12. Zusammenstellung für die Ausführung eines Verfahrens zur Belüftung eines Weins vor dessen Verkostung nach einem der Ansprüche 1 bis 3, **dadurch gekennzeichnet, dass** diese mehrere Lehren (18) aufweist, einerseits jeweils mit einem ersten Teil (20,) der als Kopf bezeichnet wird und dazu eingerichtet ist, mit einem Flaschenhals (22) einer Flasche zusammenzuwirken, und dabei den Gasaustausch zwischen dem Äußeren und dem Inneren der Flasche begrenzt, und andererseits mit einem zweiten Teil (24), der als Körper bezeichnet wird, dessen Abmessungen kleiner als der Querschnitt des Flaschenhalses sind, um auf diese Weise dem Körper zu gestatten, im Bereich des Flaschenhalses unter der von dem Kopf (20) gebildeten Barriere in das Innere der Flasche eingebracht zu werden, wobei der Körper (24) eine Verlängerung in der Gestalt eines Stabes aufweist, dessen Fülllänge sich von einer Lehre zur anderen ändert.

13. Zusammenstellung für die Ausführung eines Verfahrens zur Belüftung eines Weins vor dessen Verkostung nach Anspruch 12, **dadurch gekennzeichnet, dass** diese eine Tabelle aufweist, die die zu verwendeten Lehren enthält, in Abhängigkeit von den Eigenschaften des zu verkostenden Weins und der Dauer der abzuwartenden Periode P0', ab dem Augenblick, in dem die Flasche entkorkt worden ist und die Lehre im Bereich des Flaschenhalses eingesetzt worden ist.

14. Zusammenstellung für die Ausführung eines Verfahrens zur Belüftung eines Weins vor dessen Verkostung nach Anspruch 13, **dadurch gekennzeichnet, dass** die Tabelle zwei Einträge aufweist, einen ersten Eintrag bezüglich der Weinart weiß oder rot und einen zweiten Eintrag in Funktion der Anfälligkeit des Weins, der wenigstens zwei Variablen aufweist.

## Claims

1. Method for aerating a wine prior to its tasting, said wine being contained in a bottle having a neck closed by a cork, said method comprising after the withdrawal of the cork, putting the wine into contact with a volume of air for a time before tasting it, **characterized in that** it consists in :
- determining a volume of air that is necessary for the wine to open up depending on its properties,
- in reclosing the bottle by placing in the area of the neck a dip rod (18) having, on the one hand, a first part (20) called head that is able to cooperate with said neck (22) so as to restrict transfers of gas between the outside and the inside of the bottle, and, on the other hand, a second part (24) called body whose dimensions are smaller than the cross-section of the neck so as to make it possible for said body to be introduced inside the bottle in the area of the neck under the head (20), said body (24) having a suitable volume depending on the volume of air determined to be put into contact with the wine,
- homogenizing the contents of the bottle, and
- waiting a determined time P0' prior to its tasting.

2. Method for aerating a wine according to claim 1, **characterized in that** it consists in putting into contact with the wine a volume of air less than 5 ml.

3. Method for aerating a wine according to claim 1 or 2, **characterized in that** it consists in turning the bottle over while keeping the dip rod in contact with the neck so as to orient its neck downward, then in straightening it back up so as to homogenize the wine.

4. Device for aerating a wine for the implementation of the method for aerating a wine prior to its tasting according to one of the preceding claims, **characterized in that** it comprises at least one dip rod (18) with, on the one hand, a first part (20) called head that is able to cooperate with a neck (22) of a bottle restricting transfers of gas between the outside and the inside of the bottle, and, on the other hand, a second part (24) called body whose dimensions are smaller than the cross-section of the neck so as to make it possible for said body to be introduced inside the bottle in the area of the neck under the head (20), said body (24) having a suitable volume depending on a volume of air necessary for the wine to open up as a function of its properties.

5. Device for aerating a wine according to claim 4, **characterized in that** the body (24) comprises an extension in the form of a rod (26, 32) that can be immersed in the wine so as to reduce the amount of air in contact with the wine.

6. Device for aerating a wine-according to claim 5, **characterized in that** the rod (26, 32) is irremovable.

7. Device for aerating a wine-according to claim 5, **characterized in that** the rod (26) is removable.

8. Device for aerating a wine according to claim 5, **characterized in that** the rod (26) is connected to the body (24) using a connection that allows a relative movement between the rod and the body so as to be able to adjust the length of the rod that is projecting relative to the body.

9. Device for aerating a wine according to one of claims 5 to 8, **characterized in that** the rod (32) comprises at least one facet (34) that makes it possible to define edges (38) parallel to the axis of the body (24).

10. Device for aerating a wine according to claim 9, **characterized in that** the rod (32) has hexagonal cross-section.

11. Device for aerating a wine according to one of claims 4 to 10, **characterized in that** the body (24) comprises a peripheral recess (36) near the head (20).

12. Kit for the implementation of the method for aerating a wine prior to its tasting according to one of claims 1 to 3, **characterized in that** it comprising several dip rods (18), each with, on the one hand, a first part (20) called head that is able to cooperate with a neck (22) of a bottle restricting transfers of gas between the outside and the inside of the bottle, and, on the other hand, a second part (24) called body whose dimensions are smaller than the cross-section of the neck so as to make it possible for said body to be introduced inside the bottle in the area of the neck under the barrier formed by the head (20), the body (24) having an extension in the form of a rod whose length varies from one dip rod to the next.

13. Kit for the implementation of the method for aerating a wine prior to its tasting according to claim 12, **characterized in that** it comprises a table that identifies the dip rod to be used depending on the properties of the wine to be tasted and the duration of the time P0' to wait before tasting, starting from the moment the bottle is uncorked and the dip rod is put into place in the area of the neck.

14. Kit for the implementation of the method for aerating a wine prior to its tasting according to Claim 13, wherein the table comprises two entries, a first entry relative to the type of wine, red or white, and a second entry as a function of the fragility of the wine that comprises at least two variables.
